Europäisches Patentamt

European Patent Office

Office européen des brevets

(11) Publication number: **0 133 025**
**B1**

## (12) EUROPEAN PATENT SPECIFICATION

(45) Date of publication of patent specification: **03.02.88**

(51) Int. Cl.⁴: **G 11 B 5/54**

(21) Application number: **84305090.7**

(22) Date of filing: **26.07.84**

(54) Cassette tape recording and/or reproducing apparatus.

(30) Priority: **27.07.83 JP 136980/83**

(43) Date of publication of application:
**13.02.85 Bulletin 85/07**

(45) Publication of the grant of the patent:
**03.02.88 Bulletin 88/05**

(84) Designated Contracting States:
**AT DE FR GB IT NL**

(56) References cited:
**CH-A- 561 947**
**FR-A-2 360 148**
**US-A-4 010 493**
**US-A-4 309 733**
**US-A-4 453 189**

(73) Proprietor: **SONY CORPORATION**
**7-35 Kitashinagawa 6-Chome Shinagawa-ku**
**Tokyo 141 (JP)**

(72) Inventor: **Ida, Mitsuru c/o Patent Division**
**Sony Corporation 7-35 Kitashinagawa-6**
**Shinagawa-ku Tokyo (JP)**

(74) Representative: **Thomas, Christopher Hugo**
**et al**
**D Young & Co 10 Staple Inn**
**London WC1V 7RD (GB)**

Courier Press, Leamington Spa, England.

EP 0 133 025 B1

## Description

This invention relates to cassette tape recording and/or reproducing apparatus. The invention is particularly concerned with the so-called head base assembly of such apparatus, that is, the structure by which the magnetic head or heads and the pinch roller are movably supported in such apparatus.

In cassette tape recording and/or reproducing apparatus, where size is not of critical importance, the head base plate which carries a recording and reproducing head and an erasing head is mounted on the chassis for rectilinear movements between operative and inoperative positions. However, when the size of the apparatus is of critical importance, for example, in the case of cassette tape recording and/or reproducing apparatus which is pivotable on the person of the user, the head base plate is usually pivotally mounted on the chassis for minimizing the space required therefor. For example, as shown in US patent specification US—A—4 010 493, one end of the head base plate may be pivotally mounted on a pivot post extending perpendicularly from a chassis, and a recording and reproducing head and an erasing head are mounted on the head base plate at positions thereon remote from the pivot post so as to be movable between inoperative and operative positions in response to corresponding pivotal movements of the head base plate.

However, in such prior arrangements employing a pivoted head base plate, the end portion of the head base plate remote from the pivot post is susceptible to undesirable vibration or small movements in the direction normal to the plane of the chassis on which the cassette is located. If such vibrations or small movements occur in the recording or reproducing mode of the apparatus, the recording and reproducing head and the erasing head do not precisely engage the desired track or tracks on the magnetic tape.

In an attempt to avoid such undesirable vibrations or small movements of the pivoted head base plate in directions normal to the plane of the chassis, it has been proposed, for example, in our US patent specification US—A—4 511 941 and in our UK patent application GB—A—2 090 459, to provide the chassis with stabilizing projections extending under the pivoted head base plate at a distance from the pivot post, and being slidably engaged by the head base plate under the urging of a coil spring which extends around the pivot post and acts axially against the head base plate. However, the force of such spring acting on the head base plate at the pivoting axis thereof is insufficient reliably to prevent movements of the head base plate away from the stabilizing projections, with the result that vibrations of the head base plate normal to the plane of the chassis can still occur at location remote from the pivot post.

The above-described arrangements pose another serious problem in that the head base plate is usually of one-piece construction and has both a pinch roller and at least one magnetic head mounted thereon at relatively smaller and larger distances, respectively, from the pivot post. In such case, the angular movements of the head base plate between its operative and inoperative positions must be large enough so that, in the inoperative position, the pinch roller will be withdrawn from a tape cassette located on the chassis to permit the loading or ejecting of the tape cassette. Since the magnetic head is at a further distance from the pivot post than the pinch roller on the one-piece head base plate, the angular movement of the head base plate to its inoperative position will result in an undesirably large movement of the magnetic head away from the tape cassette with the result that such arrangement is wasteful of space.

According to the present invention there is provided a cassette tape recording and/or reproducing apparatus comprising:

a chassis defining a substantially flat plane on which a tape cassette can be located;

a magnetic head movable into a cassette located on the chassis for engaging a driven tape therein and recording or reproducing signals on the tape;

a head base assembly comprising first and second arm members;

means mounting said first arm member at one end on said chassis for swinging movement relative to said chassis about a first axis perpendicular to said plane; and

joint means connecting said second arm member to said first arm member and permitting relative angular displacements of said second arm member about a second axis substantially parallel to said first axis;

characterised by:

said joint means connecting said second arm member in substantially end-to-end relation to the other end of said first arm member;

said second arm member having said magnetic head mounted thereon; and

a fixed guide post member extending parallel to said plane, one of said arm members having a slot therein slidably receiving said guide post member for stabilizing the distance from said magnetic head to said plane as said magnetic head moves into and out of said cassette on said chassis.

In a preferred embodiment of this invention, the joint means connecting the first and second arm members includes a screw member defining the second axis and being turnable relatively to displace the connected ends of the arm members in the direction along the second axis for rocking the second arm member about the guide post member and thereby adjusting the azimuth of the magnetic head fixed to the second arm member.

The invention will now be described by way of example with reference to the accompanying drawings, throughout which like parts are referred to by like references, and in which:

Figure 1 is a plan view, partly broken away and in section, of an embodiment of cassette tape recording and/or reproducing apparatus according to the present invention;

Figure 2 is an exploded perspective view, on an enlarged scale, of a head base assembly of the embodiment of Figure 1;

Figure 3 is a perspective view of the parts of the head base assembly of Figure 2, but shown in assembled condition;

Figure 4 is a plan view of the head base assembly of Figure 3, which is shown in full lines in its inoperative position and in dot-dash lines in its operative position;

Figure 5 is a sectional view taken along the line V—V in Figure 4;

Figure 6 is a sectional view taken along the line VI—VI in Figure 5;

Figure 7 is an enlarged detail view which illustrates the pivotal mounting of an arm member of the head base assembly on a portion of the chassis of the recording and/or reproducing apparatus;

Figure 8 is an enlarged perspective view of a push-button device which is preferably employed for actuating the head base assembly;

Figure 9 is a sectional view taken along the line IX—IX in Figure 8;

Figure 10 is a sectional view taken along the line X—X in Figure 9;

Figure 11 is a perspective view similar to that of Figure 8, but showing a modification of the push-button device;

Figure 12 is an enlarged fragmentary sectional view illustrating a portion of the structure of Figure 6 in the inoperative and operative positions of the head base assembly for showing the relationship between the arm members and guide post members included in the head base assembly;

Figure 13 is a sectional view along the line XIII—XIII in Figure 12;

Figure 14 is a sectional view taken along the line XIV—XIV in Figure 12; and

Figure 15 is an enlarged fragmentary sectional view taken along the line XV—XV in Figure 14.

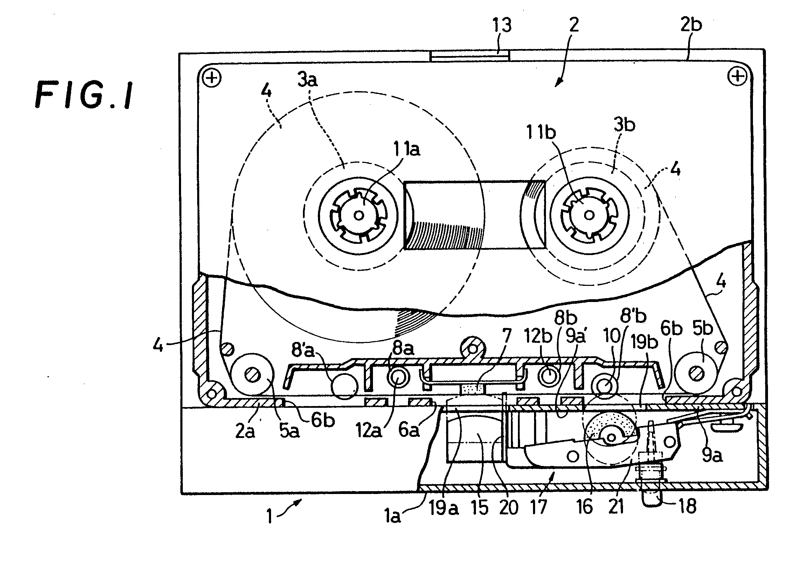

Referring first to Figure 1, a portable cassette tape reproducing apparatus 1 is intended to accommodate a standard tape cassette 2 containing a pair of rotatable reel hubs 3a and 3b. A magnetic tape 4 has its ends fixed to the hubs 3a and 3b, and is wound on the latter, with the portion of the tape 4 extending between the hubs 3a and 3b being guided by rollers 5a and 5b so as to run in a path extending along a front peripheral wall 2a of the cassette 2. The front peripheral wall 2a has a central opening or window 6a and a pair of windows 6b at opposite sides of the central window 6a. A pressure pad 7 is mounted within the cassette 2 so as to confront the central window 6a. The cassette 2 has pairs of holes 8a and 8b in the top and bottom walls of the cassette 2 adjacent to the front peripheral wall 2a at locations intermediate the central window 6a and the windows 6b. Finally, the top and bottom walls of the cassette 2 are shown to have pairs of holes 8'a and 8'b spaced outwardly from the holes 8a and 8b, respectively, so as to be positioned adjacent to the windows 6b.

The portable cassette tape reproducing apparatus 1 is generally shown to comprise a chassis 9 defining a flat plane on which the cassette 2 is to be located with the front peripheral wall 2a of the cassette 2 abutting against an upstanding wall 9a at the forward portion of the chassis 9. A rotary capstan 10 extends upwardly from the chassis 9 into one or the other of the pairs of holes 8'a and 8'b of the cassette 2 located on the chassis 9. A pair of spaced-apart spindles or drive shafts 11a or 11b extend upwardly from the chassis 9 and are arranged to engage and be rotatably coupled with the hubs 3a and 3b of the located cassette 2. Positioning pins 12a and 12b extend upwardly from the chassis 9 and are arranged to be received in the holes 8a and 8b for accurately positioning the cassette 2 on the chassis 9. A spring 13 is provided on the chassis 9 to engage the back peripheral wall 2b of the cassette 2 at the centre for yieldably urging the cassette 2 forward and thereby ensuring firm contact of the front peripheral wall 2a of the cassette 2 with the upstanding wall 9a of the chassis 9.

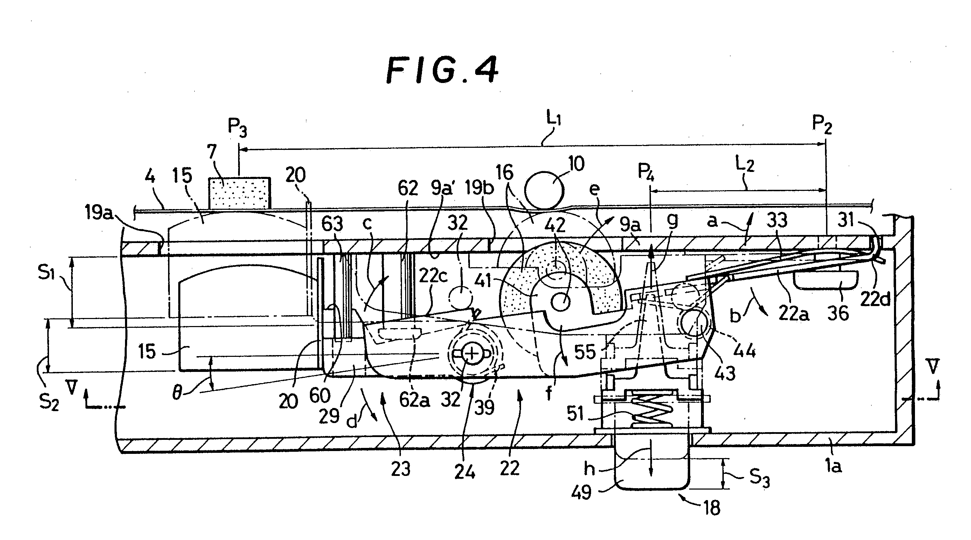

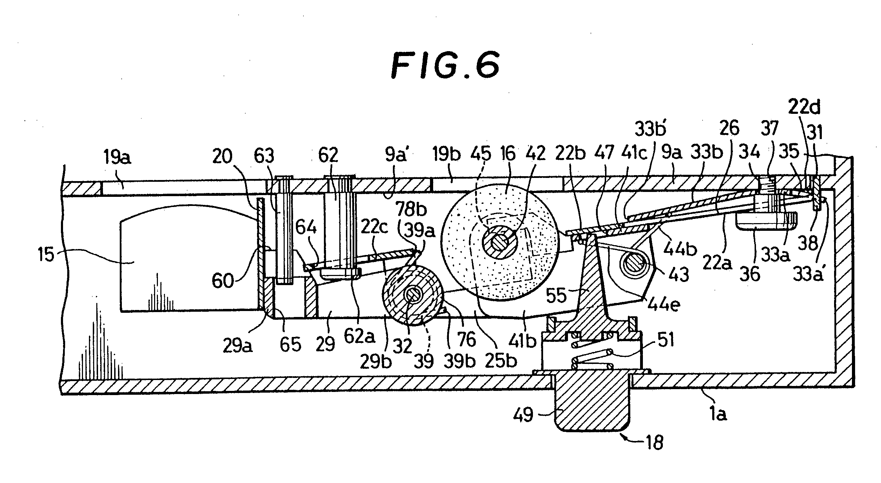

The apparatus 1 is further shown to have a magnetic head 15 and a pinch roller 16 carried by a head base assembly 17, and which is disposed in front of the upstanding wall 9a, that is, at the side 9'a of the wall 9a which is opposite to the side engaged by the cassette 2. A push-button device 18 extends from a front wall 1a of the apparatus 1 and is manually actuable for effecting movements of the head base assembly 17 from an inoperative position shown in full lines in Figure 4 to an operative position shown in dot-dash lines. The upstanding wall 9a of the chassis 9 is shown to have apertures 19a and 19b which register with the windows 6a and 6b of the cassette 2 located on the chassis 9 so that, when the push-button device 18 is actuated, the magnetic head 15 and the pinch roller 16 are moved through the aperture 19a and the window 6a, and through the aperture 19b and one of the windows 6b, respectively, and press the tape 4 against the pressure pad 7 and the capstan 10, respectively, as shown in dot-dash lines in Figure 1. At the same time, a tape guide 20 fixedly mounted beside the magnetic head 15 is moved with the magnetic head 15 through the aperture 19a and the window 6a for engaging, and thereby guiding the opposite longitudinal edges of the tape 4.

When the push-button device 18 is actuated and a power switch (not shown) is turned "ON", the capstan 10 and the shafts 11a and 11b are suitably driven by a motor (not shown) so that the tape 4 is propelled at a constant speed between the magnetic head 15 and the pressure pad 7, thereby to establish the reproducing or playback mode of the apparatus 1.

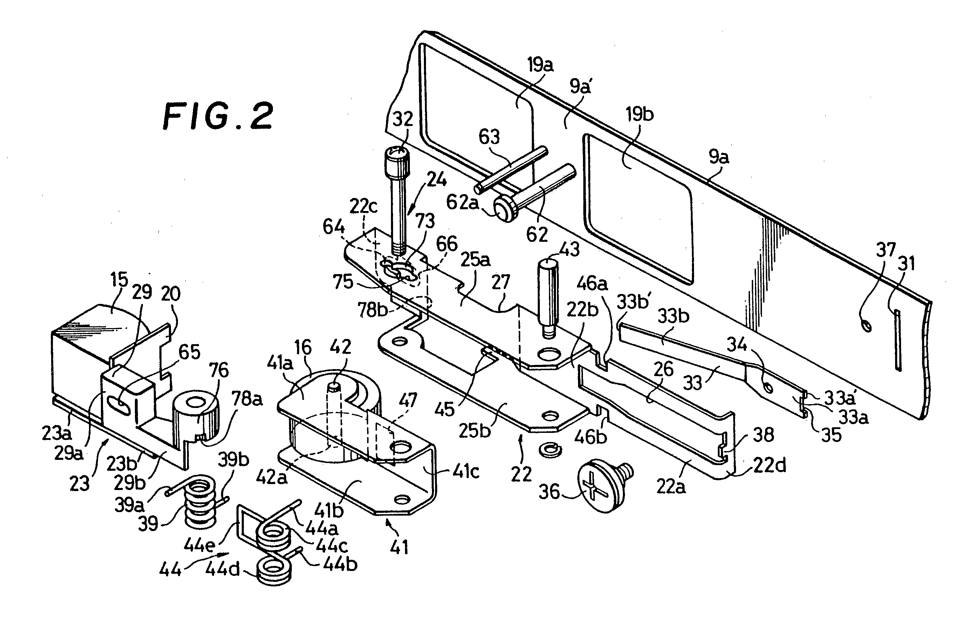

The head base assembly 17 will now be described in detail with reference to Figures 2 to 6. As shown particularly in Figure 2, the head base assembly 17 generally comprises a first arm member 22 mounted, at one end, on the chassis 9 for swinging relative to the chassis 9 about a first axis perpendicular to the plane on which the cassette 2 is located, a second arm member 23 having the magnetic head 15 mounted thereon, and a joint structure 24 connecting the second arm member 23 in end-to-end relation to the other end of the first arm member 22, and permitting relative angular displacements of the arm members 22 and 23 about a second axis parallel to the first axis.

As shown particularly in Figure 2, the first arm member 22 is preferably formed of sheet metal and, at one end portion 22a, has a rearwardly bent end 22d. Parallel, forwardly directed upper and lower flanges 25a and 25b extend along the first arm member 22 from a central portion 22b thereof to the end 22c remote from the bent end 22d. An elongated slot 26 extends along the first arm member 22 from the central portion 22b to the bent end 22d. Further, a window or cut-out 27 is formed in the first arm member 22 between the flanges 25a and 25b along the length of the first arm member 22 between the central portion 22b and the end 22c.

As shown particularly in Figures 2, 5 and 14, the second arm member 23 preferably includes an elongated metal plate 23a on which the magnetic head 15 is suitably secured, as by welding, and an attachment portion 29 moulded or otherwise suitably formed of a synthetic resin and being secured, as by a screw 30, to a projecting end portion 23b of the plate 23a. Further, the attachment portion 29 is formed with a depending projection 28a which is receivable in a hole 28b formed in the end portion 23b of the plate 23a so as to cooperate with the screw 30 in securely positioning the plate 23a and the attachment portion 29 relative to each other.

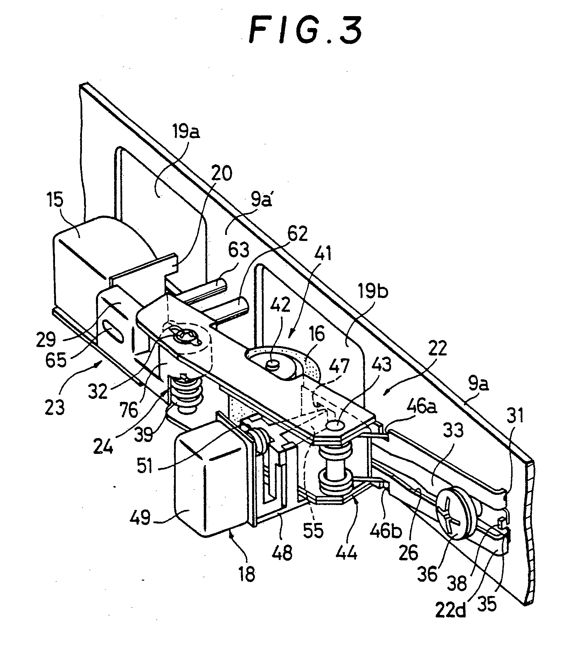

As shown in Figures 3 to 6, the bent end 22d of the first arm member 22 is inserted into a slit 31 extending through the upstanding wall 9a at right angles to the plane of the chassis 9 on which the cassette 2 is located. Thus, the first arm member 22 is mounted with respect to the upstanding wall 9a of the chassis 9 for swinging movements relative thereto in the directions of the arrows a and b in Figure 4 about a first axis defined by the slit 31.

The joint structure 24 is shown to include a screw member 32 secured to the first arm member 22 adjacent to the end 22c of the first arm member 22 remote from the bent end 22d and extending parallel to the axis defined by the slit 31 for defining the second axis about which the second arm member 23 is swingable relative to the first arm member 22 in the directions of the arrows c and d in Figure 4.

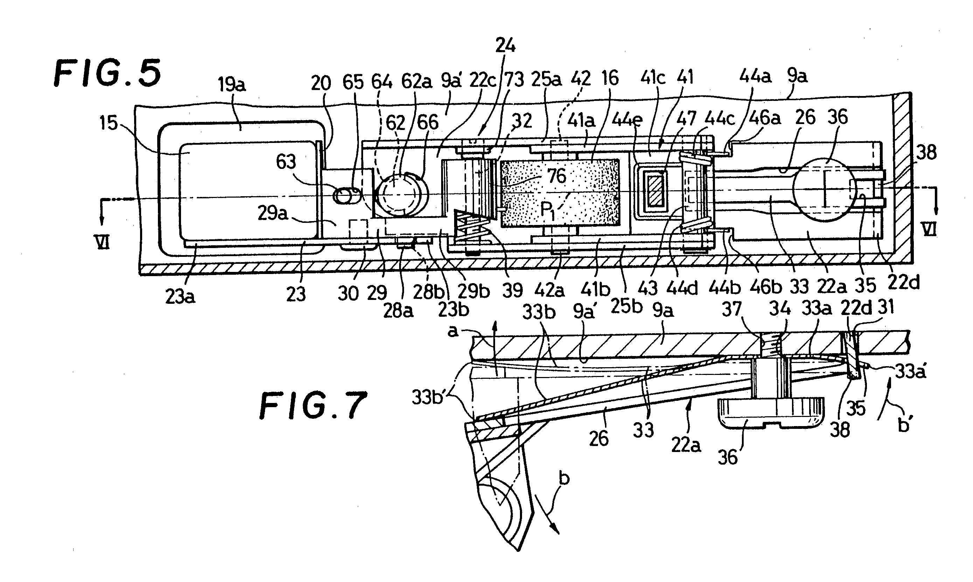

The first arm member 22 is urged in the direction of the arrow b to its inoperative position shown in full lines in Figure 4 by a bowed leaf spring 33 which is positioned between the arm member 22 and the upstanding wall 9a. The leaf spring 33 has a hole 34 extending therethrough relatively close to one end so as to divide the length of the leaf spring 33 into a short portion 33a which is formed with a central notch 35 at a forked end 33a', and a relatively long portion 33b. A screw 36 extends through the hole 34 in the leaf spring 33 and is screwed into a tapped hole 37 in the upstanding wall 9a for securing the leaf spring 33 to the upstanding wall 9a, and terminating in an end 33b' which acts against the central portion 22b of the first arm member 22. As shown particularly in Figure 2, a claw 38 is formed at the end of the slot 26 terminating in the bent end 22d of the first arm member 22, and the short portion 33a of the leaf spring 33 is dimensioned so that the claw 38 is received in the notch 35. Thus, the forked end 33a' of the leaf spring 33 acts against the bent end 22d for urging the bent end 22d in the direction of the arrow b' in Figure 7. In other words, the leaf spring 33 acts to ensure engagement of the bent end 22d of the first arm member 22 in the slit 31 of the upstanding wall 9a. It will be appreciated that, when the first arm member 22 is moved in the direction of the arrow a to its operative position shown in dot-dash lines in Figure 7, the major portion of the length of the leaf spring 33 is received in the slot 26.

The second arm member 23 is urged to turn relative to the first arm member 22 in the direction of the arrow c in Figure 4 by means of a coil spring 39 extending around the screw member 32 and engaging, at its opposite ends, against the arm members 22 and 23, as hereinafter described in detail. The attachment portion 29 of the second arm member 23 is engageable against the end 22c of the first arm member 22 for limiting the turning of the second arm member 23 relative to the first arm member 22 under the urging of the coil spring 39 to the relative positions shown in solid lines in Figure 4 and in which a predetermined angle θ is included between the longitudinal axes of the arm members 22 and 23.

A support arm 41 for the pinch roller 16 is shown particularly in Figure 2 to be formed of sheet metal and to have parallel flange portions 41a and 41b with a connecting portion 41c extending therebetween. The pinch roller 16 is shown to be rotatable on an axle 42 which, at its opposite ends, is mounted in end portions of the flanges 41a and 41b extending beyond the connecting portion 41c. The pinch roller support arm 41 is pivotally mounted, at its end remote from the axle 42, on a pivot pin 43 (Figures 3 to 6) which is secured, at its ends, in the flanges 25a and 25b of the first arm member 22 adjacent to the central portion 22b of the first arm member 22. The support arm 41 is angularly urged relative to the first arm member 22 in the direction of the arrow e in Figure 4, that is, in the direction urging the pinch roller 16 to extend through the cut-out 27 of the first arm member 22, by means of a coiled spring member 44 whch is mounted on the pivot pin 43 between the flanges 41a and 41b. The angular displacement of the pinch roller support arm 41 relative to the first arm member 22 under the urging of the spring member 44, that is, in the direction of the arrow e in Figure 4, is limited by the engagement of a downwardly projecting lower end portion 42a of the axle 42 with a stop 45 (Figures 2, 5 and 6) extending from the flange 25b into the cut-out 27 of the first arm member 22. The coiled spring member 44 is particularly shown in Figure 2 to have a pair of parallel end portions 44a and 44b extending from a pair of coil portions 44c and 44d, respectively, and a U-shaped central portion 44e extending between the coil portions 44c and 44d and initially formed to lie in a plane approximately at right angles to the plane of the end portions 44a and 44b.

In the assembled condition of the head base assembly 17, the coil portions 44c and 44d extend around the pivot pin 43 (Figures 3 to 6) with the end portions 44a and 44b engaging in notches 46a and 46b formed in the top and bottom edges of the first arm member 22, and with the central portion 44e engaging resiliently against the connecting portion 41c of the pinch roller support arm 41 so as to urge the pinch roller support arm 41 in the direction of the arrow e in Figure 4. The spring member 44 is dimensioned so that, when installed as described above, the coil portions 44c and 44d are resiliently urged in the opposite axial directions against the flange portions 41a and 41b of the pinch roller support arm 41 with the result that the central portion 44e of the spring member 44 is precisely centred with respect to the central plane $P_1$ of the pinch roller 16, as shown in Figure 5. If the material of the spring member 44 has a small "resilient constant", sufficient pressure will be obtained from the two coil portions 44c and 44d. As shown particularly in Figures 2 and 5, the connecting portion 41c of the pinch roller support arm 41 has a hole 47 therein, and the U-shaped central portion 44e of the spring member 44 is dimensioned to extend around the hole 47.

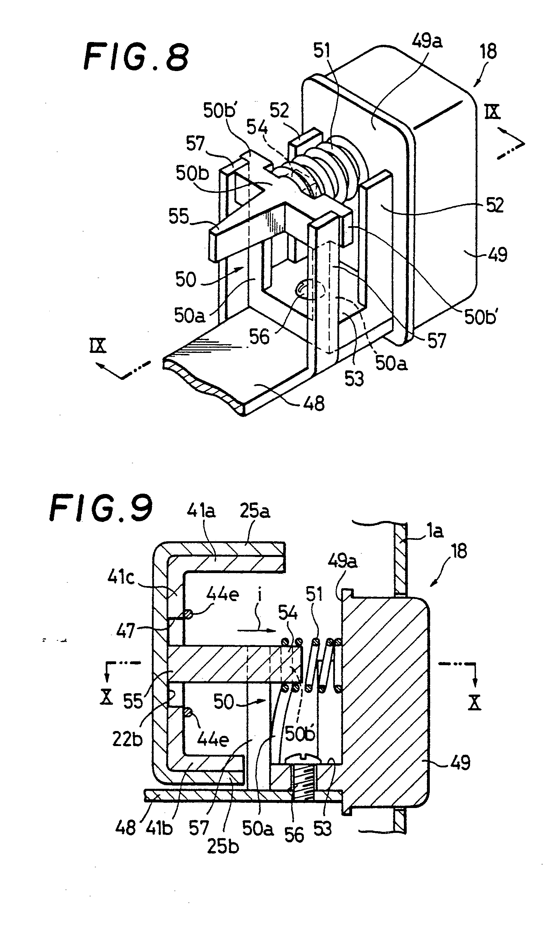

Referring now to Figures 8 to 10, it will be seen that the push-button device 18 includes a slide 48 mounted below the chassis 9 for slidable movements relative thereto in the directions of the arrows g and h in Figure 4. A body portion 49 of the push-button device 18 projects forwardly through a corresponding opening in the front wall 1a of the apparatus 1 and is preferably moulded of a synthetic resin so as to have a rim 49a which prevents forward removal of the body portion 49 through the respective opening in the front wall 1a. At the back of the body portion 49, and moulded integrally therewith, there is an actuator portion 49, and moulded integrally therewith, there is an actuator portion 50, with a coil spring 51 being interposed between the body portion 49 and the actuator portion 50. Laterally spaced-apart stiffening ribs 52 are formed integrally on the back surface of the body portion 49 along with a bottom portion 53 extending rearwardly from the body portion 49 between the lower ends of the ribs 52. The actuator portion 50 includes a pair of upstanding resilient posts 50a extending from the opposite sides of the bottom portion 53 at the end remote from the body portion 49 and being connected, at their upper ends, by an integral lateral beam 50b. A spring locating projection 54 extends from the centre of the beam 50b in the direction towards the body portion 49 and is inserted in the coil springs 51 for locating the coil spring 51. A wedge-shaped projection 55 extends from the centre of the beam 50b in the direction away from the body portion 49. A screw 56 extends through a hole in the bottom portion 53 and secures it to the slide 48. The slide 48 and the push-button device 18 connected therewith are located with respect to the head base assembly 17 so that the wedge-shaped projection 55 extends through the hole 47 in the pinch roller support arm 41 and engages, at its free end, against the central portion 22b of the first arm member 22. Formed integrally with the slide 48, at the opposite sides thereof, are upstanding abutments 57 which are relatively rigid, and whch are engageable, at their upper end portions, by the ends 50b' of the beam 50b.

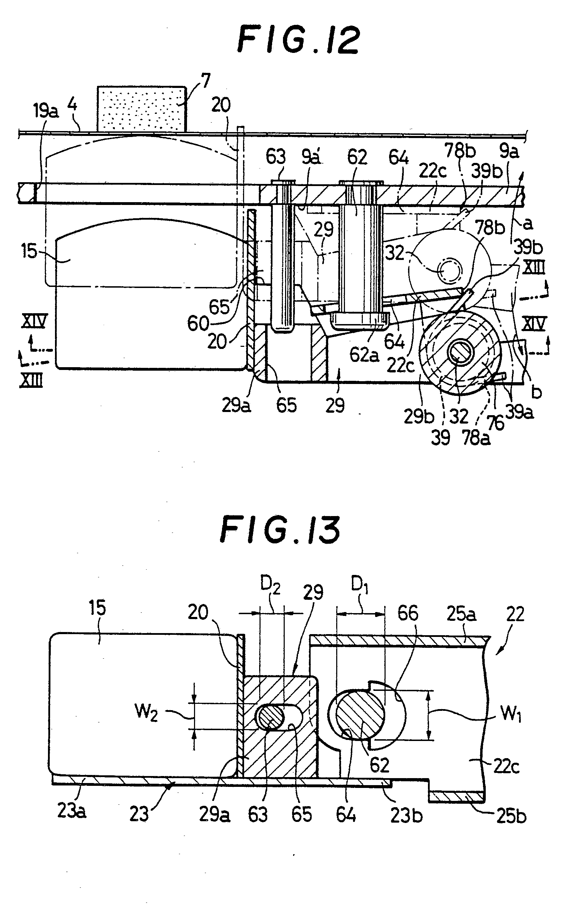

It will be appreciated that, by reason of the resilient character of the posts 50a, a force manually applied to the body portion 49 for depressing it is largely applied through the coil spring 51 to the wedge-like projection 55 for angularly displacing the first arm member 22 to its operative position against the force of the leaf spring 33. Of course, the coil spring 51 can be replaced by rubber or other resilient members, for example, by an elongated plate spring 59 fixed, at one end, by the screw 56 to the bottom portion 53, while the other or free end of the plate spring 59 acts against the surface of the beam 50b, as shown in Figure 11. Of course, a resilient element functionally equivalent to the plate spring 59 of Figure 11 could be formed integrally with the body portion 49 of the push-button device 18.

In the stop mode of the apparatus 1, the slide 48 is moved by a spring (not shown) in the direction of the arrow h in Figure 4 for disposing the body portion 49 of the push-button device 18 in its operative position shown in full lines. With the push-button device 18 in such inoperative position, the leaf spring 33 urges the first arm member 22 angularly in the direction of the arrow b about the axis defined by the bent end 22d engagingly in the slit 31, with the result that the magnetic head 15 and the pinch roller 16 are maintained in their inoperative positions shown in full lines.

When the body portion 49 of the push-button device 18 is manually depressed or moved in the direction of the arrow q through a distance $S_3$ to its operative position shown in dot-dash lines in Figure 4, the slide 48 is suitably locked in its corresponding operative position by a suitable latching plate or assembly (not shown).

During the manual depressing of the body portion 49 towards it operative position, such movement of the body portion 49 is at least initially fully transmitted to the wedge-shaped portion 55, and hence to the first arm member 22 since the coil spring 51 is substantially stronger than the leaf spring 33, that is, the coil spring 51 has a greater resistance to flexing than does the leaf spring 33. Therefore, the first arm member 22 is angularly displaced in the direction of the arrow a in Figure 4 to its operative position shown in dot-dash lines in response to movement of the body portion 49 towards its operative position. In response to such angular displacement of the first arm member 22, the first arm member 23 is similarly moved to its operative position shown in dot-dash lines in Figure 4 with the result that the magnetic head 15 and the pinch roller 16 are moved to their respective operative positions bearing against the pressure pad 7 and the capstan 10 with the tape 4 therebetween.

The several parts of the head base assembly 17 are dimensioned so that prior to the arrival of the first arm member 22 at its operative position shown in broken lines in Figure 4, the pinch roller 16 comes against the capstan 10 with the result that, during the final angular displacement of the first arm member 22 to its operative position, the pinch roller support arm 41 turns slightly relative to the first arm member 22 in the direction of the arrow f about the pivot 43. Such turning of the pinch roller support arm 41 in the direction of the arrow f relative to the first arm member 22 is effected against the force of the spring member 44. Thus, the pressure of the pinch roller 16 against the capstan 10 in the operative position of the pinch roller 16 against the capstan 10 in the operative position of the pinch roller 16 is established by the spring member 44 with such pressure being uniformly applied by reason of the precise positioning of the central portion 44e of the spring member 44 relative to the central plane of the pinch roller 16, as previously described.

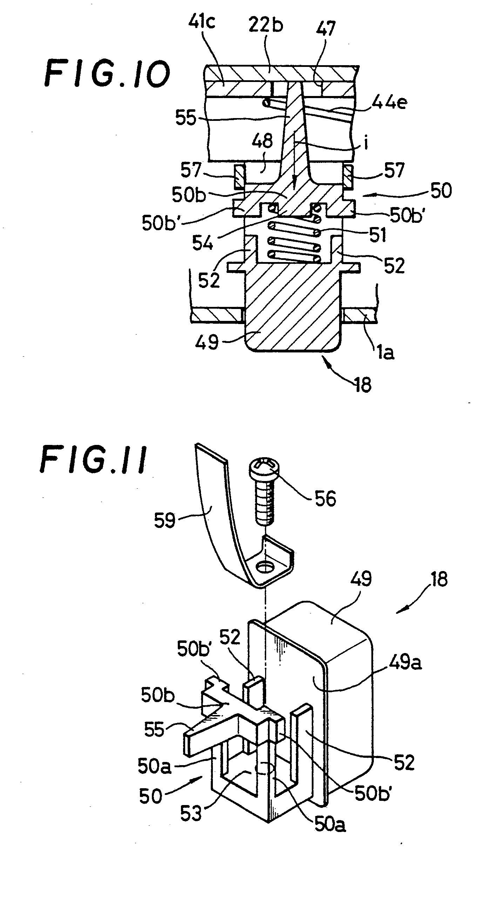

It is further to be noted that before the body portion 49 of the push-button device 18 is fully depressed through the distance or stroke $S_3$ to its operative position, the end 22c of the first arm member 22 engages against the upstanding wall 9a of the chassis 9 and thereby prevents further turning of the first arm member 22 beyond the position shown in dot-dash lines in Figure 4. Therefore, after the first arm member 22 attains its operative position, and during the final movement of the body portion 49 to its operative position, the resilient posts 50a of the actuator portion 50 are made to flex and the coil spring 51 is compressed in the direction of the arrow i in Figures 9 and 10. In other words, after the first arm member 22 has attained its operative position against the upstanding wall 9a of the chassis 9, the posts 50a and the coil spring 51 can flex to permit the final additional movement of the body portion 49 and the slide 48 to their operative positions at whch the slide 48 is thereafter locked. Thereafter, and so long as the push-button device 18 is locked in its operative position, the first arm member 22 continues to be pressed against the side 9a' of the upstanding wall 9a by the resilient forces of the posts 50a of the actuator portion 50 and the coil spring 51, respectively.

Prior to the contact of the end portion 22c of the first arm member 22 against the side 9a' of the upstanding wall 9a during the turning of the first arm member 22 in the direction of the arrow a in Figure 4, a stop surface 60 formed on the attachment portion 29 of the second arm member 23 engages against the side 9a'. Thus, during the final increment of turning movement of the first arm member 22 to its operative position, the second arm member 23 is turned relative to the first arm member 22 about the axis defined by the screw member 32 in the direction of the arrow d against the force of the coil spring 39. By reason of such final turning of the second arm member 23 relative to the first arm member 22, the orientation of the magnetic head 15 is maintained parallel to the run of the tape 4 exposed at the window 6a for ensuring that the gap in the magnetic core of the magnetic head 15 precisely scans the tape 4. Because the second arm member 23 is pressed against the front side 9a' of the upstanding wall 9a by the force of the coil spring 39, the magnetic head 15 is precisely and reliably located in its operative position. Further, by suitably locating the stop surface 60 on the attachment portion 29 of the second arm member 23, the frictional resistance to the movement of the tape 4 between the pressure pad 7 and the operatively positioned magnetic head 15 can be easily maintained constant at a preferred value, so that the magnetic tape path is stabilized during recording and/or reproducing operations.

It is also to be appreciated that, by reason of the provision of the relatively swingable arm members 22 and 23 and the joint structure 24 therebetween, the distance $L_1$ between the location $P_2$ where the head base assembly 17 is pivoted on the chassis 9, and the location $P_3$ where the magnetic head 15 is engageable against the tape 4 backed up by the pressure pad 7 can be made relatively small while the magnetic head 15 is maintained in an orientation parallel to the run of the tape 4 extending between the rollers 5a and 5b in the operatively positioned cassette 2. Furthermore, the stroke $S_2$ (Figure 4) of the magnetic head 15 between its inoperative and operative positions can be made smaller than, or at least no greater than the stroke $S_1$ of the first arm member 22 at its end 22c. By reason of the foregoing, the space required for the movements of the head base assembly 17 can be relatively small, with the result that the overall size of the apparatus 1 can be reduced.

It is also to be noted that, because the wedge-shaped projection 55 of the push-button device 18 acts directly against the first arm member 22 at a location $P_4$ (Figure 4) near to the pinch roller 16 and at a distance $L_2$ from the location $P_2$ which is preferably approximately one-third the distance $L_1$, the stroke $S_3$ for the body portion 49 of the push-button device 18 can be substantially shorter than the stroke $S_2$ of the magnetic head 15. Thus, the projection of the push-button device 18 from the front wall 1a of the housing of the apparatus 1 can be minimized.

Of course, when a stop button (not shown) of the apparatus 1 is actuated with the apparatus 1 in its play mode, the previously mentioned latching plate or assembly is released from the slide 48, with the result that the push-button device 18 and the head base assembly 17 are returned to their inoperative positions for similarly locating the magnetic head 15 and the pinch roller 16, as shown in full lines in Figure 4.

As shown particularly in Figures 12 to 15, the head base assembly 17 further includes a pair of parallel guide posts 62 and 63 extending fixedly from the front side 9a' of the upstanding wall 9a parallel to the plane of the chassis 9 on which the cassette 2 is located. The guide posts 62 and 63 are slidably received in slots 64 and 65, respectively, formed in the end portion 22c of the first arm member 22 and in an end portion 29a of the attachment portion 29 of the second arm member 23, respectively. The slot 64 has a width $W_1$ which is approximately equal to the diameter $D_1$ of the post 62, and the slot 65 has a width $W_2$ approximately equal to the diameter $D_2$ of the post 63. Therefore, the fixed posts 62 and 63 stabilize the distances from the engaged portions of the arm members 22 and 23 to the plane of the chassis 9 on which the cassette 2 is located during the angular displacements of the arm members 22 and 23 for moving the magnetic head 15 to and from its operative position. The post 62 is shown to have a head 62a at the end thereof remote from the upstanding wall 9a and which is engageable by the end 22c of the first arm member 22 for defining the inoperative position of the first arm member 22 to which it is urged by the leaf spring 33. The slot 64 is shown, particularly in Figure 13, to have an enlarged diameter end portion 66 through which the head 62a of the post 62 can be inserted when the first arm member 22 is being mounted for pivotal movements relative to the upstanding wall 9a.

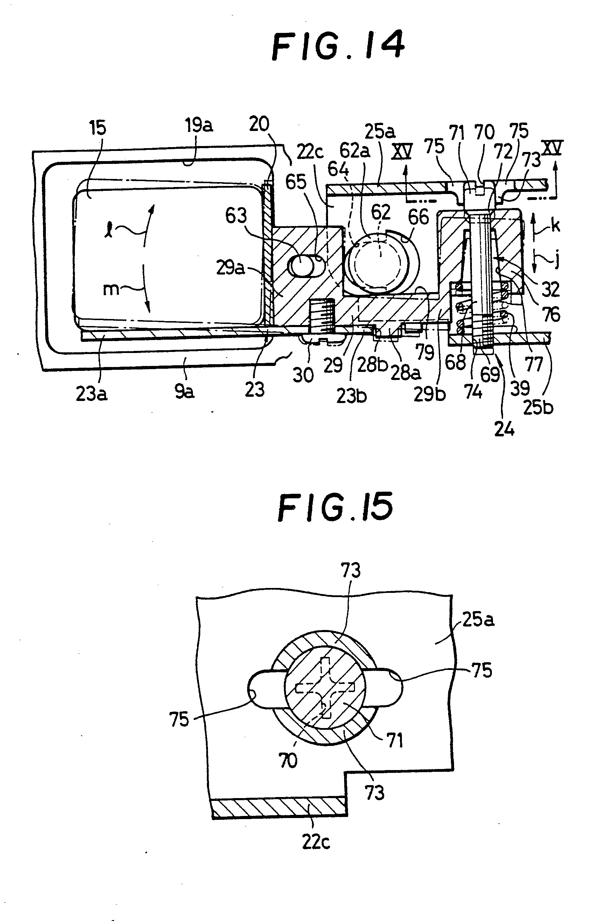

The screw member 32 of the joint structure 24 is shown to have a smooth portion or shaft 68 terminating in a threaded lower end portion 69, and an enlarged head 71 at its other end formed with a slot 70 for receiving a screwdriver, and defining a shoulder 72 between the head 71 and the shaft 68 (Figure 14). The upper flange 25a of the first arm member 22 has arcuate rims 73 depending therefrom at opposite sides of a slot 75 and being dimensioned slidably to embrace the head 71 of the screw member 32 (Figure 15). The threaded lower end portion 69 of the screw member 32 is threadably engaged in a tapped hole 74 in the lower flange 25b in the first arm member 22. Thus, rotation of the screw member 32, as by a screwdriver engaged with the slot 70 in the head 71, is effective to move the shoulder 72 of the screw member 32 in the axial direction thereof relative to the lower flange 25b of the first arm member 22.

The end portion 29b of the attachment portion 29 remote from the end portion 29a is in the form of a cylindrical hub 76 defining a frusto-conical cavity 77 loosely receiving the screw member 32 and providing, at its upper end, a seat for the shoulder 72 of the screw member (Figure 14). The coil spring 39 is disposed around the screw member 32 between the lower flange 25b of the first arm member 22 and the hub 76 so that the upper surface or seat defined by the hub 76 is urged by the coil spring 39 against the shoulder 72 of the screw member 32. Simultaneously, by reason of the engagement of the end portions 39a and 39b of the coil spring 39 in a notch 78a formed in the lower edge of the hub 76 (Figure 2) and against an end edge 78b of the end 22c of the first arm member 22 (Figure 12), respectively, the second arm member 23 is urged to turn relative to the first arm member 22 around the axis of the screw member 32 in the direction of the arrow c in Figure 4. As shown particuarly in Figure 14, the attachment portion 29 has a depression or cut-out 79 between its end portions 29a and 29b for accommodating the guide post 62 so that the guide post 62 will not interfere with either angular movements of the second arm member 23 relative to the first arm member 22 about the axis of the screw member 32 or with rocking movements of the second arm member 23 about the axis of the guide post 63.

It will be appreciated that, when the screw member 32 is rotated, as by a screwdriver engaging its slot 70, so as to move the screw member 32 axially in the direction of the arrow j in Figure 14, the shoulder 72 of the screw member 32 moves the hub 76 downwardly against the pressure of the coil spring 39, with the result that the attachment portion 29 is rocked around the guide post 63 for displacing the second arm member 23 and the magnetic head 15 thereon in the direction of the arrow 1. On the other hand, in response to turning of the screw member 32 in the direction to cause upward movement of the screw member 32 in the direction of the arrow k, the hub 76 is correspondingly moved upward by the force of the coil spring 39, with the result that the attachment portion 29, and hence the second arm member 23, is rocked about the guide post 63 in the direction of the arrow m in Figure 14. Therefore, rotation of the screw member 32 in one direction or the other is effective to vary the azimuth angle of magnetic head 15 on the second arm member 23.

Thus, the guide post 63 performs dual functions, that is, it functions to hold the second arm member 23 at a constant height relative to the chassis 9 during the movements of the magnetic head 15 between its operative and inoperative positions, and it also functions as the axis about which the second arm member 23 rocks when the screw member 32 is turned in one direction or the other for adjusting the azimuth angle of the magnetic head 15. The coil spring 39 also has dual functions, namely, angularly to urge the second arm member 23 in one direction relative to the first arm member 22 about the axis of the screw member 32, and to urge the hub 76 along the screw member 32 in the direction for seating the hub 76 against the head 71 of the screw member 32. From the foregoing, it will be appreciated that the head base assembly 17 has several of its parts constructed and arranged relative to each other to perform dual functions, thereby simplifying the structure and minimizes the space required therefor.

## Claims

1. A cassette tape recording and/or reproducing apparatus (1) comprising:
a chassis (9) defining a substantially flat plane on which a tape cassette (2) can be located;
a magnetic head (15) movable into a cassette (2) located on the chassis (9) for engaging a driven tape (4) therein and recording or reproducing signals on the tape (4);
a head base assembly (17) comprising first and second arm members (22, 23);
means (31) mounting said first arm member (22) at one end on said chassis (9) for swinging movement relative to said chassis (9) about a first axis perpendicular to said plane; and
joint means (24) connecting said second arm member (23) to said first arm member (22) and permitting relative angular displacements of said second arm member (23) about a second axis substantially parallel to said first axis; characterised by:
said joint means (24) connecting said second arm member (23) in substantially end-to-end relation to the other end of said first arm member (22);
said second arm member (23) having said magnetic head (15) mounted thereon; and
a fixed guide post member (63) extending parallel to said plane, one of said arm members (22, 23) having a slot (65) therein slidably receiving said guide post member (63) for stabilizing the distance from said magnetic head (15) to said plane as said magnetic head (15) moves into and out of said cassette (2) on said chassis (9).

2. Apparatus according to claim 1 wherein said slot (65) is in said second arm member (23).

3. Apparatus according to claim 2 wherein the width of said slot (65) measured in the direction perpendicular to the plane of said chassis (9) is substantially the same as the diameter of said guide post member (63).

4. Apparatus according to claim 3 wherein said slot (65) is located between said magnetic head (15) and the end of said second arm member (23) connected to said joint means (24) so that rocking of said second arm member (23) about said guide post member (63) varies the azimuth angle of said magnetic head (15).

5. Apparatus according to claim 4 wherein said joint means (24) includes a screw member (32) defining said second axis and being turnable relatively to displace the connected ends of said arm member (22, 23) in the direction of said second axis and thereby cause said rocking of said second arm member (23) about said guide post member (63).

6. Apparatus according to claim 5 wherein said joint means (24) further includes a coil spring (39) extending around said screw member (32) and acting against said connected ends of said arm members (22, 23) for urging said second arm member (23) to turn relative to said first arm members (22, 23) for urging said second arm member (23) to turn relative to said first arm member (22) about said second axis in the direction for moving said magnetic head (15) into said cassette (2) located on said chassis (9), and for urging one of said connected ends relative to the other in one direction along said second axis.

7. Apparatus according to claim 6 wherein said first arm member (22) includes spaced flanges (25a, 25b) at the respective one of said connected ends and between which the other of said connected ends extends, one of said flanges (25b) has a tapped hole (74) in which said screw member (32) is threaded, said other connected end includes a hub portion (76) extending loosely about said screw member (32) and defining a seat for a head (71) of said screw member (32), and said coil spring (39) is interposed between said hub portion (76) and said one flange (25b) for urging said seat against said head (71) of said screw member (32).

8. Apparatus according to claim 7 wherein the other of said flanges (25a) has a guide hole (73) in which said head of the screw member (32) is slidable.

## Patentansprüche

1. Gerät (1) zur Aufzeichnung und/oder Wiedergabe von Bandkassetten, mit
einem Chassis (9), das eine im wesentlichen ebene Fläche definiert, auf der eine Bandkassette (2) plaziert werden kann,
einem Magnetkopf (15), der in die Bandkassette (2), die auf dem Chassis (9) plaziert ist, zum Anlegen an ein angetriebenes Band (4) darin und zum Aufzeichnen und Wiedergeben von Signalen auf oder von dem Band (4) hinein bewegbar ist,
einem Kopfbasisaufbau (17), der einen ersten und einen zweiten Arm (22, 23) enthält,
einem Mittel (31), das den ersten Arm (22) an einem Ende des Chassis (9) zum Zwecke einer Schwenkbewegung relativ zu dem Chassis (9) um eine erste Achse, die senkrecht zu der Fläche steht, hält, und
einem Verbindungsmittel (24), das den zweiten Arm (23) mit dem ersten Arm (22) verbindet und relativ Winkelauslenkungen des zweiten Arms (23) um eine zweite Achse, die im wesentlichen parallel zu der ersten Achse liegt, gestattet,
dadurch gekennzeichnet, daß das Verbindungsmittel (24) den zweiten Arm (23) im wesentlichen durchgehend mit dem anderen Ende des ersten Arms (22) verbindet, daß der zweite Arm (23) den Magnetkopf (15) auf sich trägt und daß ein feststehender Führungsstift (63) vorgesehen ist, der sich parallel zu der Fläche erstreckt, wobei einer der Arme (22, 23) einen Schlitz (65) aufweist, der in sich verschiebbar den Führungsstift (63) zum Stabilisieren des Abstands des Magnetkopfes (15) zu der Fläche aufnimmt, wenn sich der Magnetkopf (15) in die Kassette (2) auf dem Chassis (9) hinein oder aus dieser heraus bewegt.

2. Gerät nach Anspruch 1, bei dem sich der Schlitz (65) in dem zweiten Arm (23) befindet.

3. Gerät nach Anspruch 2, bei dem die Breite des Schlitzes (65) gemessen in der Richtung senkrecht zu der Ebene des Chassis (9) im wesentlichen gleich dem Durchmesser des Führungsstifts (63) ist.

4. Gerät nach Anspruch 3, bei dem der Schlitz (65) zwischen dem Magnetkopf (15) und demjenigen Ende des zweiten Arms (23) angeordnet ist, das mit dem Verbindungsmittel (24) verbunden ist, so daß ein Schwingen des zweiten Arms (23) um den Führungsstift (63) den Azimutwinkel des Magnetkopfes (15) verändert.

5. Gerät nach Anspruch 4, bei dem das Verbindungsmittel (24) eine Schraube (32) enthält, die die zweite Achse definiert und relativ drehbar ist, um die verbundenen Enden der Arme (22, 23) in Richtung der zweiten Achse auszulenken und dadurch das Schwingen des zweiten Arms um den Führungsstift (63) zu bewirken.

6. Gerät nach Anspruch 5, bei dem das Verbindungsmittel (24) desweiteren eine Schraubenfeder (39) enthält, welche sich um die Schraube (32) erstreckt und gegen die verbundenen Enden der Arme (22, 23), um den zweiten Arm (23) zu zwinger, sich relativ zu dem ersten Arm (22) um die zweite Achse in der Richtung zur Bewegung des Magnetkopfes in die Kassette (2) hinein, die auf dem Chassis (9) angeordnet ist, zu drehen, und zum Verlagern eines der verbundenen Enden relativ zu dem anderen in einer Richtung längs der zweiten Achse drückt.

7. Gerät nach Anspruch 6, bei dem der erste Arm (22) einen Abstand voneinander aufweisende vorspringende Ränder (25a, 25b) an dem betreffenden der verbundenen Enden enthält, zwischen welchen sich das andere der verbundenen Enden erstreckt, wobei einer der vorspringenden Ränder (25b) ein mit Gewinde versehenes Loch (74) hat, in welches die Schraube (32) eingeschraubt ist, wobei das andere verbundene Ende einen Nabenabschnitt (76) enthält, der sich lose um die Schraube (32) herum erstreckt und einen Sitz für einen Kopf (71) der Schraube (32) definiert, und wobei die Schraubenfeder (39) zwischen den Nabenabschnitt (76) und den einen vorspringenden Rand (25b) eingesetzt ist, um den Sitz gegen den Kopf (71) der Schraube (32) zu drücken.

8. Gerät nach Anspruch 7, bei dem der andere der vorspringenden Ränder (25a) ein Führungsloch (73) aufweist, in welchem der Kopf der Schraube (32) verschiebbar sitzt.

## Revendications

1. Appareil (1) d'enregistrement et/ou de lecture sur bande magnétique en cassette, comprenant un châssis (9) formant sensiblement un plan sur lequel une cassette (2) de band magnétique peut être positionnée,

une tête magnétique (15) mobile afin qu'elle pénètre dans une cassette (2) placée sur le châssis (9) et vienne coopérer avec une bande magnétique (4) qui y est entraînée et destinée à assurer l'enregistrement ou la lecture de signaux sur la bande magnétique (4),

un ensemble (17) de base de support de tête comprenant un premier et un second bras (22, 23),

un dispositif (31) de montage du premier bras (22) à une première extrémité sur le châssis (9) afin qu'il puisse pivoter par rapport au châssis (9) autour d'un premier axe perpendiculaire audit plan, et

un dispositif (24) d'articulation raccordant le second bras (23) au premier (22) et permettant des déplacements angulaires relatifs du second bras (23) autour d'un second axe sensiblement parallèle au premier axe, caractérisé en ce que

le dispositif d'articulation (24) raccorde le second bras (23) à l'autre extrémité du premier bras (22) et pratiquement bout à bout,

le second bras (23) porte le tête magnétique (15) qui y est montée, et

un plot fixe (63) de guidage est disposé parallèlement audit plan, l'un des bras (22, 23) ayant une fente (65) permettant le logement du plot de guidage (63) qui peut y coulisser afin qu'il stabilise la distance comprise entre la tête magnétique (15) et ledit plan lorsque la tête magnétique (15) pénètre dans la cassette (2) placée sur le châssis (9) ou en sort.

2. Appareil selon la revendication 1, dans lequel la fente (65) est formée dans le second bras (23).

3. Appareil selon la revendication 2, dans lequel la largeur de la fente (65), mesurée en direction perpendiculaire au plan du châssis (9), est sensiblement égale au diamètre du plot de guidage (63).

4. Appareil selon la revendication 3, dans lequel la fente (65) est disposée entre la tête magnétique (15) et l'extrémité du second bras (23) qui est raccordée au dispositif d'articulation (24) afin que le basculement du second bras (23) autour du plot de guidage (63) fasse varier l'angle d'azimut de la tête magnétique (15).

5. Appareil selon la revendication 4, dans lequel le dispositif d'articulation (24) comporte un organe fileté (32) délimitant le second axe et pouvant tourner de manière qu'il déplace les extrémités raccordées des bras (22, 23) dans la direction du second axe et provoque ainsi un basculement du second bras (23) autour du plot de guidage (63).

6. Appareil selon la revendication 5, dans lequel dispositif d'articulation (24) comporte en outre un ressort hélicoîdal (39) disposé autour de l'organe fileté (32) et prenant appui contre les extrémités raccordées des bras (22, 23) de manière qu'il repousse le second bras (23) et le fasse tourner par rapport au premier bras (22) autour du second axe dans le sens dans lequel la tête magnétique (15) est déplacée vers l'intérieur de la cassette (2) positionnée sur le châssis (9), le ressort étant aussi destiné à repousser l'une des extrémités raccordées par rapport à l'autre dans un sens le long du second axe.

7. Appareil selon la revendication 6, dans lequel premier bras (22) a des joues espacées (25a, 25b) à la première des extrémités raccordées et entre lesquelles est placée l'autre des extrémités raccordées, l'une des joues (25b) ayant un trou taraudé (74) dans lequel est vissé l'organe fileté (32), l'autre extrémité raccordée comprenant un moyeu (76) disposé avec du jeu autour de l'organe fileté (32) et délimitant un siège pour une tête (71) de l'organe fileté (32), le ressort hélicoîdal (39) étant disposé entre le moyeu (76) et la première joue (25b) afin qu'il repousse le siège contre la tête (71) de l'organe fileté (32).

8. Appareil selon la revendication 7, dans lequel l'autre joue (25a) a un trou de guidage (73) dans lequel la tête de l'organe fileté (32) peut coulisser.

FIG.1

0 133 025

FIG.2

# FIG.3

# FIG.4

0 133 025

# FIG.6

0 133 025

# FIG.5

# FIG.7

0 133 025

# FIG.8

# FIG.9

**FIG.10**

**FIG.11**

# FIG.12

# FIG.13

# FIG.14

# FIG.15